# EUROPÄISCHE PATENTSCHRIFT

(11) **EP 1 479 634 B1**
(45) Veröffentlichungstag und Bekanntmachung des Hinweises auf die Patenterteilung: **20.06.2007**
(21) Anmeldenummer: 03011731.1
(22) Anmeldetag: 23.05.2003
(51) Int. Cl.: B65H 75/08, B65H 75/18

(54) **Welle, insbesondere Wickelwelle, mit speziellen Endhalterungen**
Shaft, especially a reel shaft, with special end supports
Arbre, en particulier un arbre d'enroulement, avec des supports d'extrémité spéciaux

(43) Veröffentlichungstag der Anmeldung: 24.11.2004
(73) Patentinhaber: EHA Spezialmaschinenbau GmbH, 35239 Steffenberg (DE)
(72) Erfinder: Kroll, Susanne Dipl.-Ing., 01324 Dresden (DE); Grothaus, Raimund Dipl.-Ing., 01326 Dresden (DE); Weg, Johannes Dipl.-Ing., 35685 Dillenburg (DE)
(74) Vertreter: Rohmann, Michael

(56) Entgegenhaltungen:
- DE-A- 3 230 116
- US-A- 4 451 245
- US-A- 4 919 359
- US-A- 5 857 643

## Beschreibung

Die Erfindung betrifft eine Welle, insbesondere eine Wickelwelle mit einem Wellenkörper aus zumindest einem faserverstärkten ersten Werkstoff, welcher Wellenkörper an zumindest einen Zapfen aus zumindest einem zweiten Werkstoff angeschlossen ist. Wickelwellen werden auch Schnellspannwellen genannt. Der Wellenkörper ist in der Regel mit seinen beiden Enden an jeweils einen Zapfen angeschlossen.

Insbesondere bei den vorgenannten Wickelwellen ist es wesentlich, dass die im Wellenkörper liegenden Spannelemente zugänglich sind. Deshalb ist normalerweise eine lösbare Verbindung zwischen dem Zapfen und dem Wellenkörper verwirklicht. Bei Wickelwellen mit metallischem Wickelkörper sind hierzu Verschraubungen zwischen einem metallischen Flansch des Zapfens und dem Wellenkörper vorgesehen.

Andererseits sind aus der Praxis Wellen bzw. Wickelwellen der eingangs genannten Art bekannt, die zur Verwirklichung einer Leichtbauweise aus faserverstärktem Kunststoff bestehen. Bei diesen Wellenkörpern aus faserverstärkten Kunststoffen ist die vorgenannte Verbindungstechnik zwischen Wellenkörper und Zapfen nur eingeschränkt verwirklichbar, da die hohe Kerbempfindlichkeit dieses Werkstoffes keine funktionssichere Verschraubung in dem Wellenkörper ermöglicht. Man hat bereits versucht, eine lösbare Schraubverbindung herzustellen, indem ein Außengewinde in ein Innengewinde des Wellenkörpers aus faserverstärktem Kunststoff eingeschraubt wird. Diese Ausführungsform hat jedoch den Nachteil, dass nur relativ geringe Momente übertragen werden können, da die Wickelwellen aus Gewichtsgründen nur eine verhältnismäßig geringe Wandstärke aufweisen, die keine ausreichende Einschraubtiefe für ein Außengewinde zulässt. Das Dokument DE-A-3230116 offenbart eine Wickelwelle gemäss dem Oberbegriff des Anspruchs 1.

Demgegenüber liegt der Erfindung das technische Problem zugrunde, eine Welle bzw. Wickelwelle der eingangs genannten Art anzugeben, die in Leichtbauweise ausgeführt ist, bei der eine lösbare Verbindung zwischen Wellenkörper und Zapfen vorgesehen ist und die eine effektive Übertragung von relativ hohen Kräften bzw. Momenten auf den Wellenkörper ermöglicht, ohne dass der Wellenkörper nachteilhafte Beeinträchtigungen oder Beschädigungen erfährt.

Zur Lösung dieses technischen Problems lehrt die Erfindung eine Welle der eingangs genannten Art, welche dadurch gekennzeichnet ist, dass der Zapfen unter Zwischenschaltung einer Anschlussbuchse aus zumindest einem dritten Werkstoff mit dem Wellenkörper verbunden ist und dass zwischen Zapfen und Anschlussbuchse eine lösbare Verbindung verwirklicht ist. Es liegt dabei im Rahmen der Erfindung, dass zwischen Zapfen und Anschlussbuchse eine lösbare und drehmomentübertragende bzw. drehmomentfeste Verbindung realisiert ist. Nach einer sehr bevorzugten Ausführungsform der Erfindung sind zweiter und dritter Werkstoff identisch.

Es liegt fernerhin im Rahmen der Erfindung, dass der erste Werkstoff, aus dem der Wellenkörper besteht, ein faserverstärkter Kunststoff ist. Vorzugsweise ist dieser Kunststoff mit Kohlenstofffasern oder hauptsächlich mit Kohlenstofffasern verstärkt. Bei dem Kunststoff handelt es sich insbesondere um duromere oder thermoplastische Kunststoffe, wobei bevorzugt ein Epoxydharz eingesetzt wird. Nach bevorzugter Ausführungsform der Erfindung besteht der Wellenkörper aus einer Epoxydharzmatrix, in der Kohlenstofffasern verteilt sind bzw. eingebettet sind. Zweckmäßigerweise bestehen die Fasern, mit denen der Kunststoff verstärkt wird zumindest zu 80 Gew.%, vorzugsweise zumindest zu 85 Gew.% aus Kohlenstofffasern. Wie weiter unten erläutert, zeichnet sich eine Ausführungsform der Erfindung dadurch aus, dass an der Oberfläche des Wellenkörpers eine andere Art von Fasern vorgesehen ist.

Es liegt im Rahmen der Erfindung, dass der zweite Werkstoff, aus dem der Zapfen besteht, ein metallischer Werkstoff bzw. ein Metall ist. Zweckmäßigerweise handelt es sich bei dem Zapfen um einen Stahlzapfen oder um einen Aluminiumzapfen. Der Wellenkörper ist normalerweise an seinen beiden Enden mit einem solchen Zapfen verbunden.

Im Rahmen der Erfindung liegt es fernerhin, dass auch der dritte Werkstoff, aus dem die Anschlussbuchse besteht, ein metallischer Werkstoff bzw. ein Metall ist. Vorzugsweise besteht die Anschlussbuchse aus einem Leichtmetall, sehr bevorzugt aus Aluminium. Die besonders bevorzugte Ausführungsform ist also dadurch gekennzeichnet, dass sowohl der zweite Werkstoff, aus dem der Zapfen besteht als auch der dritte Werkstoff, aus dem die Anschlussbuchse besteht ein metallischer Werkstoff bzw. ein Metall ist.

Es liegt im Rahmen der Erfindung, dass die Anschlussbuchse unlösbar mit dem Wellenkörper verbunden ist. Unlösbare Verbindung meint hier, dass die Verbindung zwischen Anschlussbuchse und Wellenkörper nicht mit normalem bzw. vertretbarem Kraftaufwand und dabei gezielt bzw. beabsichtigt gelöst werden kann. Die unlösbare Verbindung zwischen Anschlussbuchse und Wellenkörper ist also zumindest nicht ausschließlich als Schraubverbindung eingerichtet. Nach sehr bevorzugter Ausführungsform ist zwischen Anschlussbuchse und Wellenkörper eine Klebverbindung als unlösbare Verbindung vorgesehen. Nach einer Ausführungsform handelt es sich um eine Kleb/Press-Verbindung. Es liegt im Rahmen der Erfindung, dass zwischen Anschlussbuchse und Wellenkörper neben der Klebverbindung zusätzlich auch eine Schraubverbindung und/oder eine Verzahnungsverbindung vorgesehen ist. Nach einer anderen Ausführungsform der Erfindung ist zwischen Anschlussbuchse und Wellenkörper eine Formschlussverbindung durch Einwicklung der Anschlussbuchse in den faserverstärkten Kunststoff des Wellenkörpers als unlösbare Verbindung verwirklicht. Die unlösbare Verbindung zwischen Anschlussbuchse und Wellenkörper wird nach dieser Ausführungsform, also mittels eines Formschlussverbundes durch Bewickeln der Anschlussbuchse mit dem faserverstärkten Kunststoff hergestellt.

Im Rahmen der Erfindung liegt es, dass die lösbare Verbindung zwischen Zapfen und Anschlussbuchse mit Hilfe von Stiften und/oder Schrauben realisiert ist. Es handelt sich zweckmäßigerweise um Metallstifte und/oder Metallschrauben. Wenn nach sehr bevorzugter Ausführungsform sowohl der Zapfen als auch die Anschlussbuchse aus einem metallischen Werkstoff bestehen, ist dann die lösbare Verbindung lediglich zwischen metallischen Elementen verwirklicht. Nach sehr bevorzugter Ausführungsform, der im Rahmen der Erfindung ganz besondere Bedeutung zukommt, sind für die lösbare Verbindung zwischen Zapfen und Anschlussbuchse Passstifte und/oder Passschrauben vorgesehen. Vorzugsweise durchgreifen bzw. durchfassen die für die lösbare Verbindung eingesetzten Stifte und/oder Schrauben einen Anschlussflansch des Zapfens und fassen fernerhin in die Anschlussbuchse ein. Der Anschlussflansch des Zapfens besteht zweckmäßigerweise aus einem metallischen Werkstoff. Nach sehr bevorzugter Ausführungsform der Erfindung sind die für die lösbare Verbindung vorgesehenen Stifte und/oder Schrauben mit ihrer Längsachse in Axialrichtung bzw. Längsrichtung der Welle orientiert. Nach einer weiteren bevorzugten Ausführungsform findet eine Zentrierung von Zapfen und nicht lösbarer Anschlussbuchse über einen Absatz zwischen Zapfen und Anschlussbuchse statt.

Nach einer sehr bevorzugten Ausführungsform der Erfindung ist an der Außenoberfläche bzw. im Bereich der Außenoberfläche des Wellenkörpers eine andere Faserart vorgesehen als im übrigen Wellenkörper. Bei dieser Ausführungsform ist im Inneren des Wellenkörpers eine erste Art von Fasern vorgesehen und im Bereich der Außenoberfläche des Wellenkörpers ist eine zweite Art von Fasern vorgesehen bzw. angereichert. Bei der ersten Art von Fasern, die im Inneren des Wellenkörpers vorgesehen sind, handelt es sich vorzugsweise um Kohlenstofffasern. Bei der zweiten Art von Fasern, die im Bereich der Außenoberfläche des Wellenkörpers vorgesehen sind bzw. angereichert sind, handelt es sich um zumindest eine Faserart aus der Gruppe "Glasfasern, Aramidfasern, Polyolefinfasern". Als Polyolefinfasern werden dabei insbesondere Polyethylenfasern eingesetzt. Der Erfindung liegt die Erkenntnis zugrunde, dass durch Anreicherung der letztgenannten Faserarten die Schlagschutzeigenschaften der erfindungsgemäßen Welle bzw. des Wellenkörpers beachtlich verbessert werden können. Die zweite Faserart zeichnet sich durch eine im Vergleich zu Kohlenstofffasern verbesserte Schlagbeständigkeit aus. Dagegen sind die Steifigkeitseigenschaften der zweiten Faserart schlechter als bei Kohlenstofffasern. Im Bereich der Außenoberfläche des Wellenkörpers meint im Übrigen einen Bereich mit einer Dicke, die maximal 10 %, vorzugsweise maximal 5 % der radialen Ausdehnung des Wellenkörpers bzw. des Radius des Wellenkörpers entspricht. Nach einer Ausführungsform der Erfindung ist die Kunststoffmatrix des Wellenkörpers im Bereich der Außenoberfläche des Wellenkörpers mit Additiven, insbesondere mit zumindest einem Weichmacher versetzt. Zweckmäßigerweise beträgt die Schichtdicke der mit den genannten Additiven versetzten Kunststoffmatrix 1 bis 5 mm, vorzugsweise 2 bis 3 mm an der Außenoberfläche des Wellenkörpers. Es liegt im Rahmen der Erfindung, dass die Kunststoffmatrix 5 bis 20 Vol.-%, bevorzugt 5 bis 15 Vol.-% Additive enthält. So kann beispielsweise ein Elastomer wie Ethylen-Propylen-Dien-Mischpolymerisat (EPDM) zugesetzt sein. Als Additiv kann auch zumindest ein Thermoplast, wie beispielsweise ein Polyamid eingesetzt werden. Fernerhin liegt es im Rahmen der Erfindung thermoplastisch modifizierte Elastomere als Additive zu verwenden. Nach einer Ausführungsform der Erfindung befindet sich auf der Außenoberfläche des Wellenkörpers eine reine faserfreie Elastomerbeschichtung. Dabei handelt es sich zweckmäßigerweise um ein aufvulkanisiertes Elastomer.

Wenn zur Herstellung der Verbindung zwischen Zapfen, Anschlussbuchse und Wellenkörper Klemmelemente eingesetzt werden, so bestehen diese Klemmelemente nach sehr bevorzugter Ausführungsform der Erfindung ebenfalls aus einem faserverstärkten Kunststoff. Auf diese Weise wird eine effektive Gewichtsreduzierung der erfindungsgemäßen Welle erreicht. Vorzugsweise enthalten die Klemmelemente dann Kurzfasern, die in einer Kunststoffmatrix verteilt sind. Ein Klemmelement enthält zweckmäßigerweise zumindest eine Faserart aus der Gruppe "Glasfasern, Kohlenstofffasern". Für die Kunststoffmatrix eines Klemmelementes wird zumindest ein Kunststoff aus der Gruppe "Polyolefin, Polyamid, Polyetheretherketon" eingesetzt. Vorzugsweise werden diese Klemmelemente im Spritzgussverfahren hergestellt.

Der Erfindung liegt die Erkenntnis zugrunde, dass eine erfindungsgemäße Welle mit sehr geringem Gewicht in Leichtbauweise ausgeführt werden kann und nichtsdestoweniger allen Anforderungen genügt, die insbesondere an eine Wickelwelle gestellt werden. Vor allem findet eine effektive und funktionssichere Übertragung hoher Kräfte und Momente von dem Zapfen auf den Wellenkörper statt, ohne dass der Wellenkörper irgendwelchen Schaden nimmt. Hervorzuheben ist auch, dass die erfindungsgemäße Welle mit verhältnismäßig geringem Aufwand und somit auch mit geringen Kosten verwirklicht werden kann.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch einen Teil einer erfindungsgemäßen Welle in einer ersten Ausführungsform,
- Fig. 2: den Gegenstand nach Fig. 1 in einer zweiten Ausführungsform,
- Fig. 3: den Gegenstand gemäß Fig. 1 in einer dritten Ausführungsform,
- Fig. 4: den Gegenstand nach Fig. 1 in einer vierten Ausführungsform,
- Fig. 5: den Gegenstand gemäß Fig. 1 in einer fünften Ausführungsform,
- Fig. 6: den Gegenstand aus Fig. 1 in einer sechsten Ausführungsform,
- Fig. 7: den Gegenstand nach Fig. 1 in einer siebten Ausführungsform,
- Fig. 8: den Gegenstand gemäß Fig. 1 in einer achten Ausführungsform,
- Fig. 9: eine Draufsicht auf den Gegenstand nach Fig. 8.
- Fig. 10: den Gegenstand nach Fig. 1 in einer weiteren Ausführungsform,
- Fig. 11: einen Querschnitt durch den Gegenstand gemäß Fig. 10 und
- Fig. 12: den Gegenstand nach Fig. 1 in einer zusätzlichen Ausführungsform.

Die Figuren zeigen einen Teil einer Wickelwelle mit einem Wellenkörper 1, der aus einem faserverstärkten Kunststoff besteht. Der Wellenkörper 1 ist an einen Zapfen 2 angeschlossen, der im Ausführungsbeispiel aus einem metallischen Werkstoff, nämlich aus Stahl besteht. Der Zapfen 2 ist unter Zwischenschaltung einer Anschlussbuchse 3 mit dem Wellenkörper 1 verbunden. Die Anschlussbuchse 3 besteht im Ausführungsbeispiel aus einem metallischen Werkstoff, nämlich aus Aluminium. Diese Anschlussbuchse 3 ist unlösbar mit dem Wellenkörper 1 verbunden, vorzugsweise über eine Klebverbindung. Zwischen Zapfen 1 und Anschlussbuchse 3 ist dagegen eine lösbare drehmomentübertragende Verbindung verwirklicht.

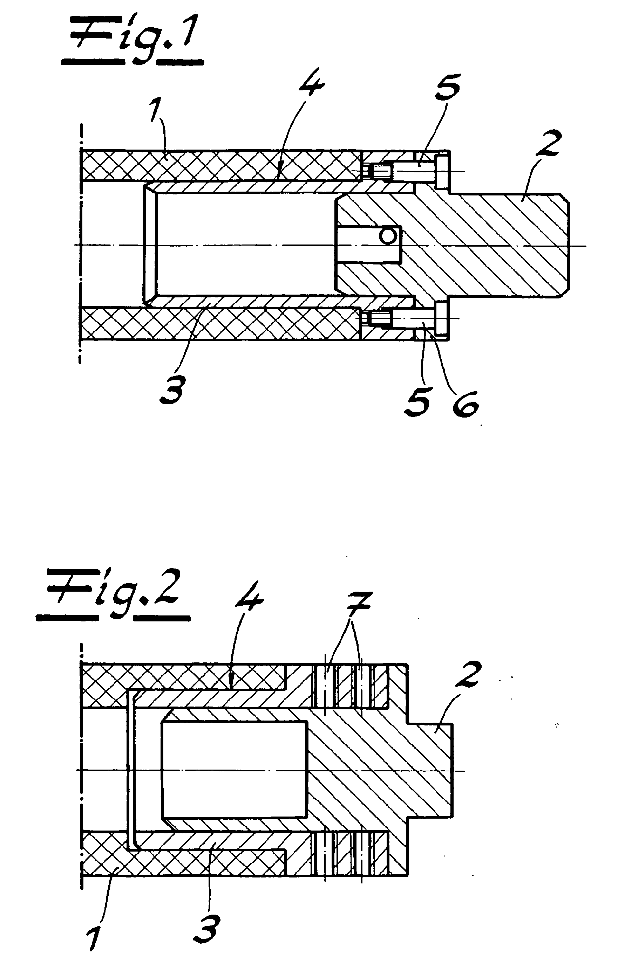

Im Ausführungsbeispiel nach Fig. 1 ist die metallische Anschlussbuchse 3 in den Wellenkörper 1 eingeklebt, wobei mit dem Bezugszeichen 4 die Klebeverbindung zwischen Wellenkörper 1 und Anschlussbuchse 3 angedeutet wurde. Die lösbare Verbindung zwischen Zapfen 2 und Anschlussbuchse 3 ist im Ausführungsbeispiel gemäß Fig. 1 mit Hilfe von Passschrauben 5 realisiert. Die Passschrauben 5 durchgreifen einen Anschlussflansch 6 des Zapfens 2 und greifen fernerhin in die Anschlussbuchse 3 ein. Durch Lösen der Passschrauben 5 kann die Verbindung zwischen Wellenkörper 1 bzw. Anschlussbuchse 3 und Zapfen 2 gelöst werden. Die Ausführungsform nach Fig. 1 stellt im Übrigen die sehr bevorzugte Ausführungsform der Erfindung dar, die sich besonders bewährt hat.

Im Ausführungsbeispiel nach Fig. 2 ist die Anschlussbuchse 3 ebenfalls mit dem Wellenkörper 1 verklebt. Die kraftübertragende Verbindung zwischen Zapfen 2 und Anschlussbuchse 3 ist auch hier als lösbare Verbindung ausgeführt. Zapfen 2 und Anschlussbuchse 3 sind lösbar über nicht näher dargestellte Gewindestifte miteinander verbunden, die in die Öffnungen 7 einfassen.

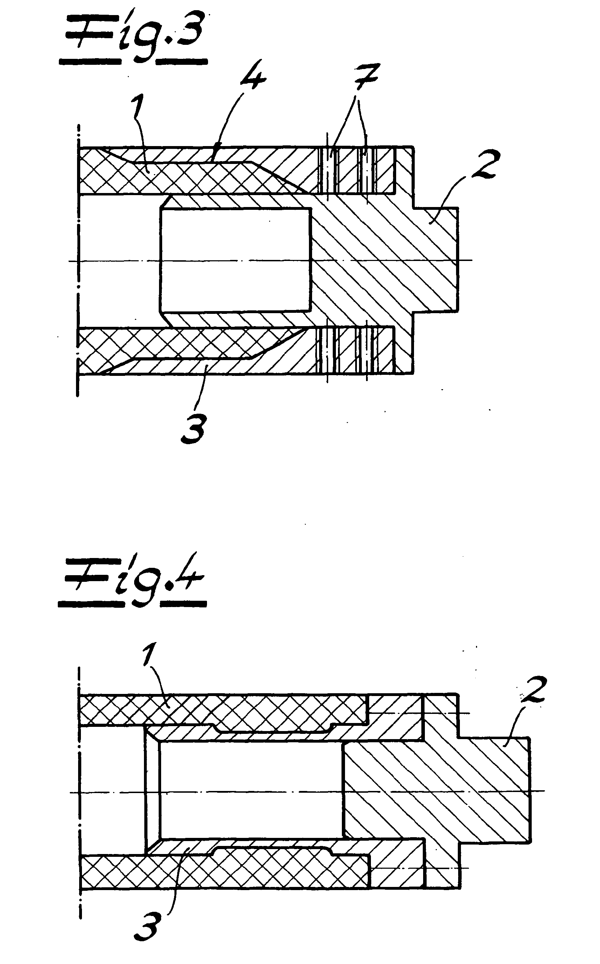

Die Ausführungsform nach Fig. 3 unterscheidet sich von der Ausführungsform gemäß Fig. 2 dadurch, dass in Fig. 3 die Anschlussbuchse 3 von außen auf den Wellenkörper 1 aufgeschoben wurde bzw. mit dem Wellenkörper 1 verklebt wurde.

Fig. 4 zeigt eine Ausführungsform, bei der zwischen Anschlussbuchse 3 und Wellenkörper 1 eine Formschlussverbindung durch Einwicklung der Anschlussbuchse 3 in den faserverstärkten Kunststoff des Wellenkörpers 1 verwirklicht ist. Der Formschluss erfolgt hier gleichsam durch einen Hinterschnitt.

Bei der Ausführungsform gemäß Fig. 5 ist die Anschlussbuchse 3 über eine Kleb/Press-Verbindung mit dem Wellenkörper 1 zusammengefügt. Anschlussbuchse 3 und Zapfen 2 sind jeweils kegelförmig ausgeführt und werden reibschlüssig gegeneinander verspannt. Die Verbindung zwischen Zapfen 2 und Anschlussbuchse 3 ist auch bei dieser Ausführungsform lösbar. Mit Hilfe von nicht näher dargestellten Abdrückschrauben ist die Demontage der verkeilten Bauteile 2 und 3 möglich.

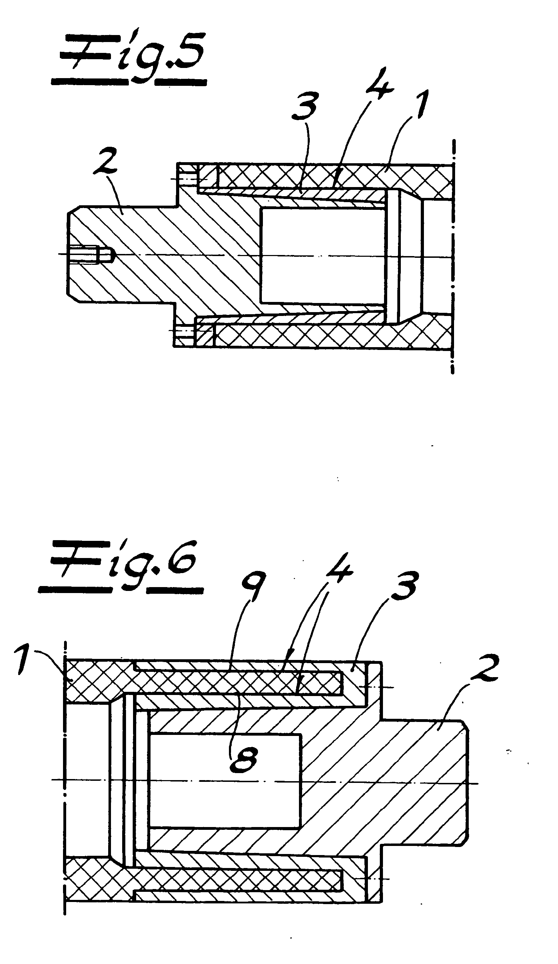

In der Ausführungsform nach Fig. 6 ist wie beim Ausführungsbeispiel der Fig. 4 der Kegelpresssitz verwirklicht. Die Anschlussbuchse 3 umschließt hier jedoch den Wellenkörper 1, so dass die effektiv wirksame Klebefläche zwischen Wellenkörper 1 und Anschlussbuchse 3 wesentlich größer ist. Im Ausführungsbeispiel nach Fig. 6 ist die innere Klebfläche 8 als Kleb/Press-Verbindung ausgeführt, während die äußere Klebfläche 9 nicht unter Vorspannung steht.

Auch im Ausführungsbeispiel nach Fig. 7 ist die Anschlussbuchse 3 mit dem Wellenkörper 1 verklebt. Hier erfolgt eine Verspannung mit einem konusförmigen Klemmelement 10. Als axiale Führung für dieses Klemmelement 10 ist ein Innenelement 11 in dem Wellenkörper 1 vorgesehen. Das Innenelement 11 ist zweckmäßigerweise so eingerichtet, dass eine gegenseitige Verdrehung von Klemmelement 10 und Innenelement 11 verhindert wird. Dazu kann das Innenelement 11 entsprechend geformt sein bzw. entsprechende nicht dargestellte Formschlusselemente aufweisen. Die Verspannung des konusförmigen Klemmelementes 10 mit der Anschlussbuchse 3 erfolgt durch das Anziehen einer Kontermutter 12. Dadurch wird eine axiale Verschiebung des konusförmigen Klemmelementes 10 gegenüber dem Innenelement 11 bewirkt. Das Innenelement 11 wird im Übrigen im Ausführungsbeispiel nach Fig. 7 mit Hilfe eines Sicherungsringes 13 gegen eine axiale Bewegung gesichert.

Im Ausführungsbeispiel nach den Fig. 8 und 9 ist die Anschlussbuchse neben einer Verklebung mit dem Wellenkörper 1 auch mit diesem Wellenkörper 1 axial verzahnt (Fig. 9). Der Zapfen 2 kann über nicht dargestellte Passschrauben, eine Passfeder, eine Keilwelle oder mittels Kegelpresssitz mit der Anschlussbuchse 3 kraftschlüssig oder formschlüssig verbunden werden.

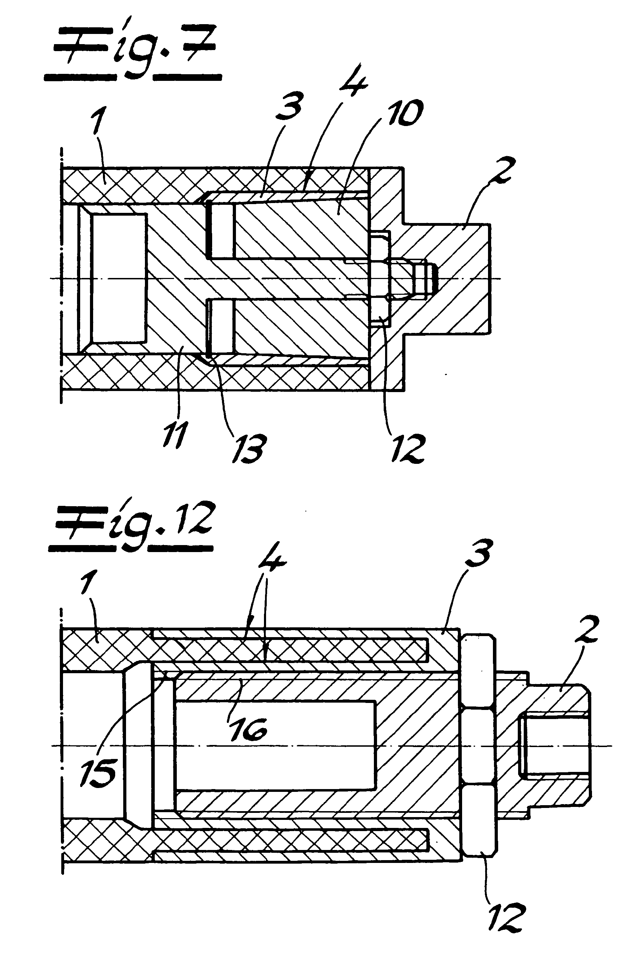

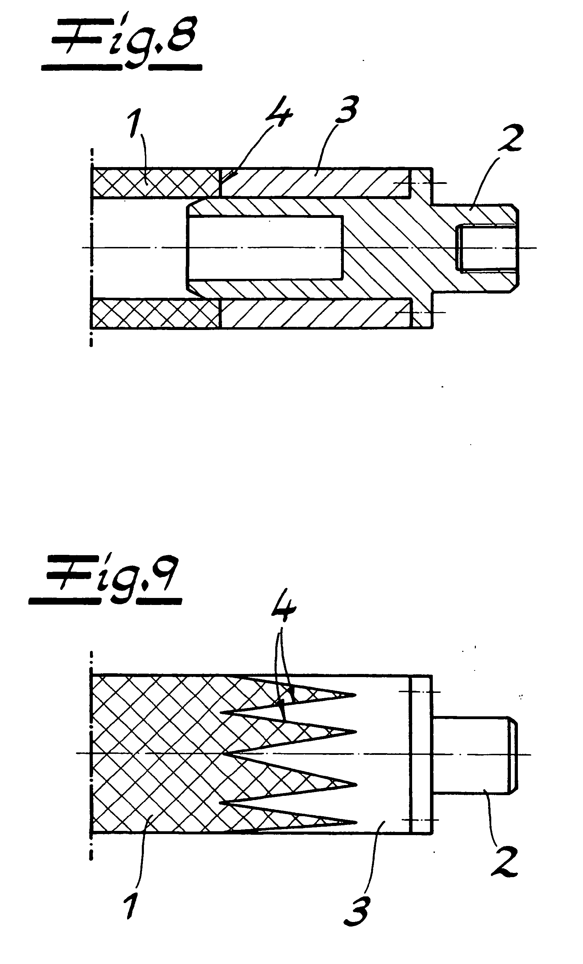

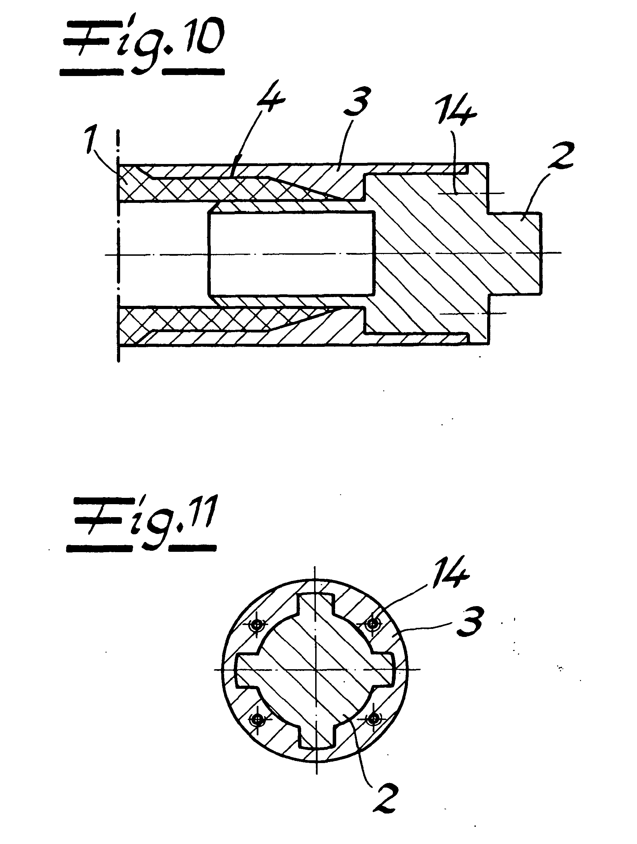

Die Fig. 10 und 11 zeigen eine Ausführungsform, bei der die metallische Anschlussbuchse 3 von außen auf den Wellenkörper 1 geschoben wird und mit dem Wellenkörper 1 verklebt wird. Zwischen dem Zapfen 2 und der Anschlussbuchse 3 wird eine Formschlussverbindung verwirklicht, so dass eine effektive Drehmomentübertragung vom Zapfen 2 auf die Anschlussbuchse 3 stattfinden kann. Die Formschlussverbindung wird in Fig. 11 verdeutlicht. Zapfen 2 und Anschlussbuchse 3 sind mittels einer Keilwellenverbindung gefügt. Die lösbare Verbindung von Anschlussbuchse 3 und Zapfen 2 wird axial durch Schrauben 14 gesichert.

Im Ausführungsbeispiel nach Fig. 12 ist die Anschlussbuchse 3 ebenfalls auf den Wellenkörper 1 aufgeklebt, wobei die Anschlussbuchse 3 den Wellenkörper 1 unterseitig und oberseitig umschließt (ähnlich wie im Ausführungsbeispiel nach Fig. 6). Die Anschlussbuchse ist hier aber mit einem Innengewinde 15 versehen, in das der mit einem entsprechenden Außengewinde 16 versehene Zapfen 2 einschraubbar ist. Die axiale Fixierung des Zapfens 2 erfolgt hier mit einer Kontermutter 12, die den Zapfen 2 mit der Anschlussbuchse 3 verspannt. Auf diese Weise können Drehmomente über Reibschluss übertragen werden. Fig. 12 zeigt lediglich ein Wellenende. Es liegt im Rahmen der Erfindung, dass an einem Wellenende bezüglich der Schraubverbindung zwischen Zapfen 2 und Anschlussbuchse 3 ein Rechtsgewinde und am anderen Wellenende ein Linksgewinde eingerichtet ist. Auf diese Weise erfolgt im Betrieb eine Verspannung von Zapfen 2 und Wellenkörper 1 bzw. Anschlussbuchse 3.

## Patentansprüche

1. Welle, insbesondere Wickelwelle mit einem Wellenkörper (1) aus zumindest einem faserverstärkten ersten Werkstoff, welcher Wellenkörper (1) an zumindest einen Zapfen (2) aus zumindest einem zweiten Werkstoff angeschlossen ist, **dadurch gekennzeichnet, dass** der Zapfen (2) unter Zwischenschaltung einer Anschlussbuchse (3) aus zumindest einem dritten Werkstoff mit dem Wellenkörper (1) verbunden ist und dass zwischen Zapfen (2) und Anschlussbuchse (3) eine lösbare Verbindung verwirklicht ist.

2. Welle nach Anspruch 1, **dadurch gekennzeichnet, dass** der erste Werkstoff, aus dem der Wellenkörper (1) besteht, ein faserverstärkter Kunststoff ist.

3. Welle nach einem der Ansprüche 1 oder 2, **dadurch gekennzeichnet, dass** der zweite Werkstoff, aus dem der Zapfen (2) besteht, ein metallischer Werkstoff ist.

4. Welle nach einem der Ansprüche 1 bis 3, **dadurch gekennzeichnet, dass** der dritte Werkstoff, aus dem die Anschlussbuchse (3) besteht, ein metallischer Werkstoff ist.

5. Welle nach einem der Ansprüche 1 bis 4, **dadurch gekennzeichnet, dass** die Anschlussbuchse (3) unlösbar mit dem Wellenkörper (1) verbunden ist.

6. Welle nach einem der Ansprüche 1 bis 5, **dadurch gekennzeichnet, dass** zwischen Anschlussbuchse (3) und Wellenkörper (1) eine Klebeverbindung (4) verwirklicht ist.

7. Welle nach einem der Ansprüche 1 bis 6, **dadurch gekennzeichnet, dass** zwischen Anschlussbuchse (3) und Wellenkörper (1) eine Formschlussverbindung durch Einwicklung der Anschlussbuchse (3) in den faserverstärkten Kunststoff des Wellenkörpers (1) verwirklicht ist.

8. Welle nach einem der Ansprüche 1 bis 7, **dadurch gekennzeichnet, dass** die lösbare Verbindung zwischen Zapfen (2) und Anschlussbuchse (3) mit Hilfe von Stiften und/oder Schrauben realisiert ist.

9. Welle nach Anspruch 8, **dadurch gekennzeichnet, dass** die Stifte und/oder Schrauben einen Anschlussflansch (6) des Zapfens (2) durchgreifen.

10. Welle nach einem der Ansprüche 8 oder 9, **dadurch gekennzeichnet, dass** die Stifte und/oder die Schrauben mit ihrer Längsachse in Axialrichtung der Welle orientiert sind.

11. Welle nach einem der Ansprüche 1 bis 10, **dadurch gekennzeichnet, dass** im Inneren des Wellenkörpers (1) eine erste Art von Fasern vorgesehen ist und dass im Bereich der Außenoberfläche des Wellenkörpers (1) eine zweite Art von Fasern vorgesehen ist.

12. Welle nach einem der Ansprüche 2 bis 11, **dadurch gekennzeichnet, dass** eine Schicht des Kunststoffes an der Außenoberfläche des Wellenkörpers (1) mit zumindest einem Additiv, insbesondere mit zumindest einem Weichmacher versetzt ist.

13. Welle nach einem der Ansprüche 1 bis 11, **dadurch gekennzeichnet, dass** an der Außenoberfläche des Wellenkörpers eine faserfreie Elastomerschicht aufgebracht ist.

## Claims

1. A shaft, especially a reel shaft, with a shaft body (1) of at least one fibre-reinforced first material, which shaft body (1) is joined to at least one journal (2) of at least one second material, **characterized in that** the journal (2) is connected to the shaft body (1) by the interposing of a connecting bush (3) of at least one third material, and that between the journal (2) and the connecting bush (3) a releasable connection is realized.

2. The shaft according to Claim 1, **characterized in that** the first material of which the shaft body (1) consists is a fibre-reinforced plastic.

3. The shaft according to any of Claims 1 or 2, **characterized in that** the second material of which the journal (2) consists is a metallic material.

4. The shaft according to any of Claims 1 to 3, **characterized in that** the third material of which the connecting bush (3) consists is a metallic material.

5. The shaft according to any of Claims 1 to 4, **characterized in that** the connecting bush (3) is inseparably connected to the shaft body (1).

6. The shaft according to any of Claims 1 to 5, **characterized in that** an adhesive connection (4) is realized between the connecting bush (3) and the shaft body (1).

7. The shaft according to any of Claims 1 to 6, **characterized in that** a form-fitting connection is realized between the connecting bush (3) and the shaft body (1) by enclosing the connecting bush (3) into the fibre-reinforced plastic of the shaft body (1).

8. The shaft according to any of Claims 1 to 7, **characterized in that** the releasable connection between the journal (2) and the connecting bush (3) is realized by means of bolts and/or screws.

9. The shaft according to Claim 8, **characterized in that** the bolts and/or screws penetrate a connecting flange (6) of the journal (2).

10. The shaft according to any of Claims 8 or 9, **characterized in that** the bolts and/or the screws are oriented with their longitudinal axis in the axial direction of the shaft.

11. The shaft according to any of Claims 1 to 10, **characterized in that** a first type of fibres is provided in the interior of the shaft body (1) and that a second type of fibres is provided in the region of the outer surface of the shaft body (1).

12. The shaft according to any of Claims 2 to 11, **characterized in that** a layer of the plastic on the outer surface of the shaft body (1) is mixed with at least one additive, particularly with at least one softener.

13. The shaft according to any of Claims 1 to 11, **characterized in that** a fibre-free elastomer layer is applied on the outer surface of the shaft body.

## Revendications

1. Arbre, en particulier arbre de bobine comprenant un corps d'arbre (1) en au moins un premier matériau renforcé par des fibres, lequel corps d'arbre (1) est raccordé à au moins un tourillon (2) en au moins un deuxième matériau, **caractérisé en ce que** le tourillon (2) est assemblé avec le corps d'arbre (1) avec intercalation d'un manchon de raccordement (3) en au moins un troisième matériau, et qu'un assemblage amovible est réalisé entre le tourillon (2) et le manchon de raccordement (3).

2. Arbre suivant la revendication 1, **caractérisé en ce que** le premier matériau, dont se compose le corps d'arbre (1), est une matière plastique renforcée par des fibres.

3. Arbre suivant l'une des revendications 1 et 2, **caractérisé en ce que** le deuxième matériau, dont se compose le tourillon (2), est un matériau métallique.

4. Arbre suivant l'une des revendications 1 à 3, **caractérisé en ce que** le troisième matériau, dont se compose le manchon de raccordement (3), est un matériau métallique.

5. Arbre suivant l'une des revendications 1 à 4, **caractérisé en ce que** le manchon de raccordement (3) est assemblé de façon inamovible avec le corps d'arbre (1).

6. Arbre suivant l'une des revendications 1 à 5, **caractérisé en ce qu'**un assemblage collé (4) est réalisé entre le manchon de raccordement (3) et le corps d'arbre (1).

7. Arbre suivant l'une des revendications 1 à 6, **caractérisé en ce qu'**un assemblage par coopération de forme est réalisé entre le manchon de raccordement (3) et le corps d'arbre (1), par enroulement du manchon de raccordement (3) dans la matière plastique renforcée par des fibres du corps d'arbre (1).

8. Arbre suivant l'une des revendications 1 à 7, **caractérisé en ce que** l'assemblage amovible entre le tourillon (2) et le manchon de raccordement (3) est réalisé à l'aide de broches et/ou de vis.

9. Arbre suivant la revendication 8, **caractérisé en ce que** les broches et/ou vis traversent une bride de raccordement (6) du tourillon (2).

10. Arbre suivant l'une des revendications 8 et 9, **caractérisé en ce que** les broches et/ou les vis sont orientées par leur axe longitudinal dans la direction axiale de l'arbre.

11. Arbre suivant l'une des revendications 1 à 10, **caractérisé en ce qu'**une première sorte de fibres est prévue à l'intérieur du corps d'arbre (1), et qu'une deuxième sorte de fibres est prévue dans la zone de la surface extérieure du corps d'arbre (1).

12. Arbre suivant l'une des revendications 2 à 11, **caractérisé en ce qu'**une couche de la matière plastique sur la surface extérieure du corps d'arbre (1) est mélangée à au moins un additif, en particulier à au moins un plastifiant.

13. Arbre suivant l'une des revendications 1 à 11, **caractérisé en ce qu'**une couche élastomère sans fibre est appliquée sur la surface extérieure du corps d'arbre.
